# EUROPEAN PATENT APPLICATION

(11) **EP 2 520 482 A1**
(43) Date of publication of application: **07.11.2012**
(21) Application number: 12386013.2
(22) Date of filing: 25.04.2012
(51) Int. Cl.: B62M 19/00, B62M 1/04

(54) **Gear-driven bicycle**

(30) Priority: 04.05.2011 GR 2011100267
(71) Applicant: Mastrokalos, Antonios, 84003 Sifnos (GR)
(72) Inventor: Mastrokalos, Antonios, 84003 Sifnos (GR)

(57) **Abstract**

The invention relates to a gear-driven bicycle, the mechanism of which converts the oscillation of the lever arms (2) to rotational motion on the wheel (22) of the bicycle. The motion is transferred from the pedals (7) through the spring (6) to the rear part (10) of the lever arm which ends to a bifurcation. In the bifurcation a large-diameter conical gear (13) is fixed which is permanently meshed with a respective low-diameter conical gear (17), which via a shaft (18) transfers its motion to two further conical gears (19) and (20) permanently meshed between them. Therefrom the motion is transferred to the wheel (22) via a shaft (21).

## Description

The present invention relates to a bicycle motion transmission by the use of a gear. A new motion transmission from the cyclist's legs to the wheels of the vehicle is provided, which facilitates motion.

Until now, many efforts have been made to facilitate a cyclist during motion. These are mainly directed to improvements in the manufacture materials, reduction in bicycle weight, reduction in the forces applied for motion. Further interventions have been the parallel use of small petrol engines, fuel cell machines or hybrid electric engines that store energy in rechargeable batteries. Furthermore, speed systems or derailers have been used, and/or coupling of pairs of sprocket wheels having different gauges. Although various techniques have been used to facilitate a cyclist, no effort has been made to eliminate the crank arms, which constitute an established system for creating and providing rotational motion to the rear wheel only.

In contrast, the present invention provides a new technique for motion production and transmission, which is more effective and convenient. The use of a hydraulic system allows motion transmission to one wheel or both wheels at the same time. The difference lies in the use of a lever arm, instead of the conventional chain with the crank arm which has a limited radius length (ca. 16 - 20 cm) and requires increased efforts by the cyclist. The length of the lever arm always exceeds the diameter of the wheel and, depending on the selected frame of the bicycle, may be more than 80 cm, which is the average length of the feet of an average-height human. In this way, the cyclist does not have to apply significant efforts in order to perform the reciprocing oscillation of the thigh by circular motion of the shins. On the contrary, it is as if he simply bears his weight with his legs, the only force required, since the motion of the legs are limited to a small-arc oscillation. The torque obtained by such an arm is significantly larger than that of the conventional crank arms, thus the cyclist does not have to apply intense pedaling in an uphill road or to get off the bicycle at difficult points. Another advantage is thus the high speeds that can be achieved with significantly lower effort.

These and other features as well as advantages of the present invention will be apparent by the following detailed description. The invention will be better understood with reference to the accompanying figures which show an exemplary embodiment thereof.
Figure 1 shows a perspective view of the motion system of the bicycle, as proposed by the present invention. It also shows the frame on which the motion system of the bicycle is supported and operates.
Figure 2 shows in plan view the motion system of the bicycle with its framework and the oscillation lever arms.

Referring to these figures, we will describe a preferred embodiment of the invention.

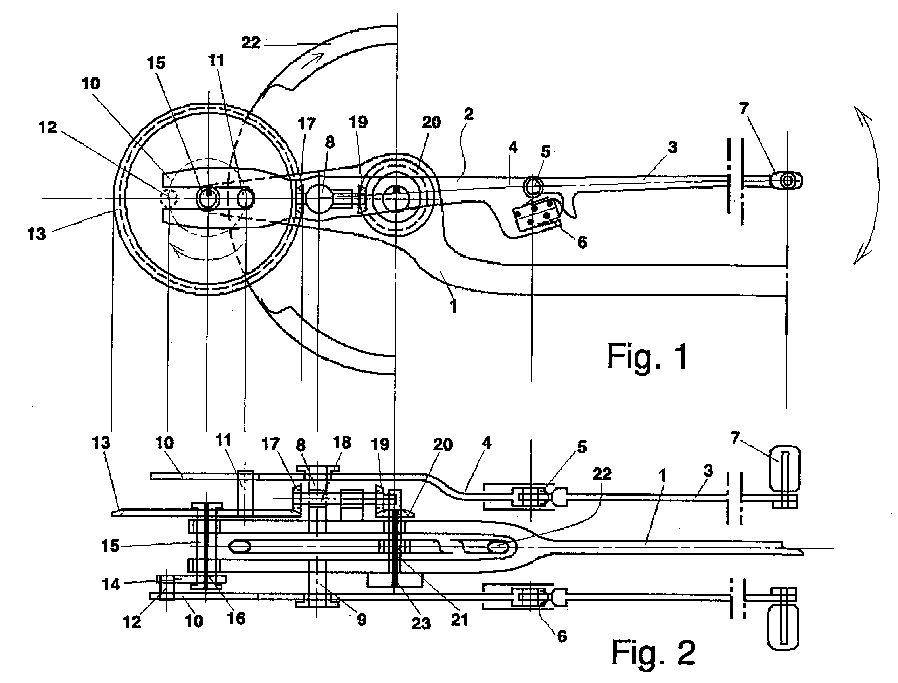

The motion mechanism of the present invention consists of a frame (1), figure 2, with the bicycle motion system consisting of the oscillation lever arm (2), which is divided in 3 parts, the front part (3) connected to the intermediate part (4) by an articulation pin (5) and a hard spring (6), so that the whole oscillation lever arm (2) has an elastic, non-rigid, behavior when force is initially applied by the cyclist's legs on the pedals (7), so that the energy output from the spring (6) returns to the main body of the oscillation lever arm (2). The same procedure is applied again during the journey or near the end thereof, so that motion and energy provision to the oscillation lever arm (2) is allowed. The fixation pins (8), (9) connect the rear part of the lever arm (10) to the intermediate part (4), finally ending to a bifurcation or Scotch Yoke. In the bifurcation there are two pins (11), (12), oppositely positioned, which connect the disk with the large-diameter conical gear (13) to the connecting arm (14), which transfer motion via the shaft (15) and the key (16). The system also comprises a ratchet gearing (not shown) which prevents the reversal of the selected direction of motion activation, converting the oscillation of the lever arms (2) to rotational motion of specific rotation direction. For the transfer of the motion, four gears of different diameters are used, so that the speed ratio is as large as possible and the required force from the cyclist is as low as possible. The rotational motion from the large-diameter conical gear (13) is transmitted to the low-diameter conical gear (17) that is permanently meshed with that. Their ratio should be as high as possible, as already mentioned, so that the speed to be transmitted via the shaft (18) is as high as possible. The shaft (18) is connected to a conical gear (19), which is opposite to gear (17) and permanently meshed with the last conical gear (20) which is positioned on the shaft (21) of the wheel (22) and has a key (23). It should be noted that the parts of the mechanism may be covered by a protection cover, in order to protect the grease of the gears and to prevent deposition of dust thereon. In this way, a frequent replacement or cleaning of the motion parts of the bicycle is obviated.

In an exemplary calculation example regarding the speed, and considering a typical speed ratio between large-diameter conical gear (13) and small-diameter conical gear (17) equal to 6, while in parallel considering a ratio between the other conical gears (19), (20) equal to 1, we conclude that with 40 pairs of pedaling -left and right lever arm- per minute, the bicycle will reach a speed equal to 144 km/h.

In an alternative embodiment of the invention, opposite to the conical gear (20) and on the free end of the shaft, a hydraulic supply pump may be arranged, which will acquire the same number of revolutions from the conical gear (20) and will supply the hydraulic engine fixed on the shaft of the front wheel (not shown herein). The connection of the hydraulic supply pump to the hydraulic engine is effected by a closed type-pressure tank, so that gas formation is prevented on one hand and an unobstructed filling of all the elements is ensured on the other. The use and further operation principle of the said elements are already known to the skilled in the art.

By the disclosed motion system, apart from bicycles, the wheels of other human-driven vehicles, such as wheelchairs, four-wheeled recreation vehicles, propellers of various marine sport vehicles may be also driven.

It should be noted that the description of the invention was made with reference to an exemplary, non-limiting embodiment. Any change or modification regarding the shape, size, dimensions, manufacture/assembly materials and components used, application fields, as long as not constituting a new inventive step and not contributing in the known state of the art, are considered encompassed in the scope of the present invention.

## Claims

1. Gear-driven bicycle, **characterized in that** it consists of an oscillation lever arm (2), divided to three parts, the front part (3), the intermediate part (4) and the rear part (10), which ends to a bifurcation, in which a large-diameter conical gear (13) is connected, which is permanently meshed with a low-diameter conical gear (17), from which the motion is transmitted via the shaft (18) to the opposite conical gear (19) and from that it is transmitted to the conical gear (20) and thus to the wheel (20) of the vehicle.

2. Gear-driven bicycle, according to claim 1, **characterized in that** the large-diameter conical gear (13) is connected to the arm (14) by means of pins (11), (12), and by means of a shaft (15) and a ratchet gearing it prevents a reversal in the motion direction and converts the oscillation of the oscillation lever arms (2) to a rotational motion of a specific rotation direction.

3. Gear-driven bicycle, according to claim 1, **characterized in that** the conical gear (20) may be connected to a hydraulic pump and a hydraulic engine connected between them by a closed type-pressure tank, so that the motion of the cyclist is further facilitated.
